# EUROPEAN PATENT APPLICATION

(11) **EP 0 954 964 A1**
(43) Date of publication of application: **10.11.1999**
(21) Application number: 99107850.2
(22) Date of filing: 21.04.1999
(51) Int. Cl.: A01M 23/30

(54) **Vermin trap**

(30) Priority: 29.04.1998 DK 58498
(71) Applicant: BERTIL ENGSTRÖM ENGINEERING APS, 3250 Gilleleje (DK)
(72) Inventor: Engström, Bertil, 3250 Gilleleje (DK)
(74) Representative: Roerboel, Leif

(57) **Abstract**

Vermin trap comprising a housing (1) with an entry opening (16) for the vermin to be caught and a trap mechanism mounted in the housing (1) which trap mechanism comprises:
a mainly U-shaped impact clamp (2) movable between a tensioned mainly vertical position and a triggered mainly horizontal position, at least one spring (3) tensioning the impact clamp (2) towards the triggered position, a latch (7) which is mounted pivotally at its top end and which can, by means of a hook-shaped part, retain the impact clamp (2) triggerable in the tensioned position, a tipping device (8), which is mounted pivotally, to interact with the lower end of the latch (7) for releasing of the retention of the impact clamp (2) by the latch (7) when the tipping device is activated by a rat or mouse, and a tensioning handle (4) connected to the impact clamp (2) to allow manual movement of the impact clamp (2) from the triggered position to the tensioned position, which handle is located outside the housing (1), and where the latch (7) is designed in such a way that the movement of the impact clamp (2) from the triggered position to the tensioned position provides the releasable meshing between the latch (7) and the impact clamp (2). The impact clamp (2), the spring (3), and the handle (4) are made in one piece as an integrated component, preferably made of a spring wire, and the handle (4) constituting part of this integrated component, projecting through an opening (14) in the housing (1) which opening (14) is designed to allow movement of the handle (4) between the two positions. Hereby a simplified technical design is achieved with few individual components.

## Description

### TECHNICAL FIELD

This invention relates to a vermin trap, especially for rats and mice, as indicated in the introduction to claim 1.

### BACKGROUND ART

Such a vermin trap is known from DK 5348/85. That trap is made up of rather many individual components thus making assembly of the trap rather labour-intensive. Furthermore, the string-formed winding mechanism for tensioning of the trap is unapt inasmuch as this feature may hamper quick triggering of the trap if the string is not placed for smooth pulling into the trap on triggering.

### DISCLOSURE OF THE INVENTION

The object of this invention is to provide a trap of the type mentioned above where the number of components has been reduced and the above drawbacks have been remedied.

This object is fulfilled by the measures mentioned in the characterizing part of claim 1. By designing the impact clamp, the spring, and the handle in one piece as an integrated component, a substantial reduction of the number of trap components is achieved and thus also a reduction of the work involved in assembling the trap. Advantageous further development of the trap appears from claims 2-5.

It is a further object of the invention to provide an option for mounting an alarm system which can either raise a simple acoustical and/or visual alarm or transmit an alarm signal, wired or wireless, to a suitably designed surveillance system for several such traps. From US 5 154 017 and US 5 184 416 such alarm systems are known relying on detection of the triggered position of the impact clamp. However, this position is influenced by the presence of the trapped animal and is thus not well defined resulting in an unreliable alarm function. Similarly, from US 5 477 635 an alarm system is known which detects the movement of the impact clamp, which is cumbersome and unreliable, too, and this constructional mode involving photo detectors require a certain constant power consumption with the risk that batteries may run flat.

The alarm system according to this invention depends, as indicated in claim 6, on detection of the position of the impact clamp in its tensioned position. As this position is well defined a reliable alarm function is achieved. By using a micro switch for detection of the tensioned position, as indicated in claim 8, the alarm system may be designed in such a manner that the micro switch will cut off the power supply for the electronics for as long as the impact clamp remains tensioned whereby the power consumption is limited to the self-discharge of the battery, until the alarm is raised. The alarm electronics are preferably encased in an electronics box which can be fastened by a clip to the trap enabling free choice between various versions, such as no alarm, simple local alarm or wired or wireless remote alarm.

### BRIEF DESCRIPTION OF THE DRAWINGS

In the following the invention is explained in more detail by means of an embodiment example as shown in the drawing, where
fig. 1 shows a longitudinal section of a trap according to the invention, and
fig. 2 shows a cross section of the trap according to fig. 1 along the line II-II.

### DESCRIPTION OF THE PREFERRED EMBODIMENTS

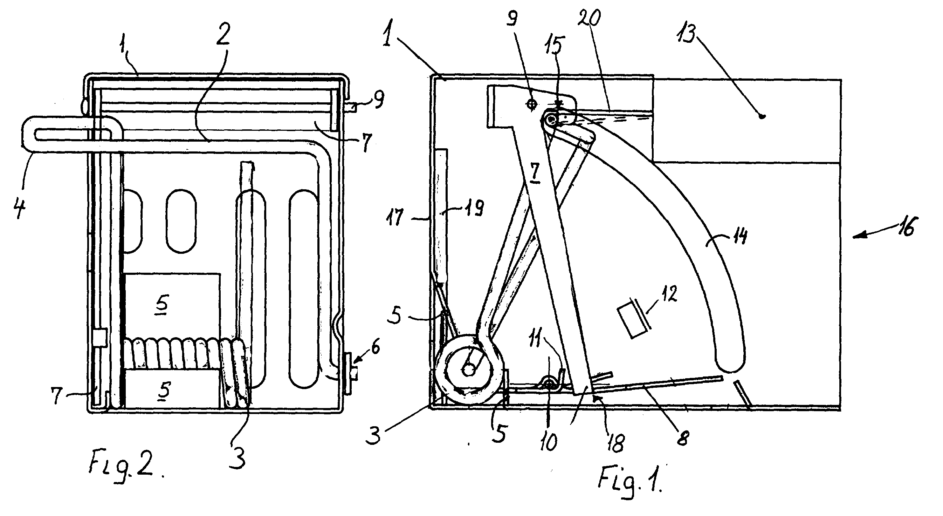

The vermin trap shown in the drawing includes a housing 1 with an entry opening 16 for the vermin to be caught. In the housing 1 a trap mechanism is mounted consisting of a mainly U-shaped impact clamp 2 which is movable between a mainly vertical position as shown in the drawings and a triggered mainly horizontal position. The housing and the impact clamp are designed in such a manner that the rat or mouse to be caught is only able to approach the trap mechanism from the entry opening 16 thus making sure that the animal is unfailingly hit in the back of its head and is killed. The impact clamp 2 is designed with a handle 4 for tensioning of the impact clamp, and this handle protrudes through an opening 14 in the side wall of the housing 1. The side legs of the impact clamp 2 run mainly along the side walls of the housing 1, and turns at the bottom of the housing 1 the side leg connected with the handle 4 into a helical spring 3 which tensions the impact clamp in the direction towards the triggered position. The other side leg of the impact clamp 2 is mounted 6 in the side wall of the housing 1 opposite to and coaxial with the helical spring 3. The helical spring 3 is retained at the bottom of the housing 1 against the rear wall 17 by means of die-cut and folded down flaps gripping the helical spring 3. The free end of the helical spring is provided with a driver end 19 resting against the rear wall 17 to transmit the spring moment. A latch 7 is mounted pivotally around an axle 9 at the top end of the latch 7, which axle 9 is fixed to the side walls of the housing 1. The latch 7 includes a hook-shaped part to retain the impact clamp 2. In the embodiment shown the hook-shaped part is placed in such a manner that it is just not self-locking so that the impact clamp 2 actuates the latch to turn anticlockwise as seen in fig. 1. The latch 7 includes a mainly vertically running arm, running along one side wall of the housing 1. The bottom end of this arm meshes with a tipping device 8 in the tensioned position of the impact clamp 2. The tipping device is mounted pivotally around an axle 10 which is mounted in the side walls of the housing 1. At the side where the latch 7 is to be retained, the tipping device 8 has a recess 11 for meshing with the latch 7. Moreover, the tipping device 8 is provided with a turned-up flap which causes the required tipping of the tipping device 8 to provide the required meshing between the latch 7 and the recess 11 in the tipping device 8.

When tensioning the trap from the triggered position where the impact clamp 2 is positioned mainly horizontally near the bottom of the housing 1, the handle 4 is gripped and is moved upwards in the recess 18 during tensioning of the spring 3. When the impact clamp 2 hits the retaining hook 15 on the latch 7, the latch is actuated to turn anticlockwise as shown in fig. 1, whereby the impact clamp 2 can be moved past the retaining hook 5 for meshing behind the latter. By further movement of the impact clamp 2 the latch is actuated to turn clockwise as shown in fig. 2 whereby the bottom part of the latch 7 hits the bent flap on the tipping device 8 and actuates the latter to turn anticlockwise as shown in fig. 1. Hereby the recess in the tipping device 8 is brought into a position in which the tipping device 8 prevents anticlockwise turning of the latch as shown in fig. 1. When the handle 4 and thus the impact clamp are subsequently released, the impact clamp 2 will, due to spring tension, actuate the latch 7 to turn anticlockwise as shown in fig. 1, and the lower end of the latch 7 will thus rest against an edge in the recess in the tipping device 8. With the embodiment shown, the transmission ratio from the force of the impact clamp acting on the hook-shaped part 15 of the latch further on to the lower part of the latch and via the recess in the tipping device 8 to the tipping device is such that the tipping device can be moved with a force which is very small compared with the spring force. The trap is thus triggered by a minimal activation of the tipping device, whereby the latch just clears the recess in the tipping device and thus releases the impact clamp 2 from the retaining hook 15. The spring 3 then assures that the impact spring moves to the triggered position.

The tipping device 8 is preferably mounted in the main balanced around the axle 10 with a tendency of turning anticlockwise as seen in fig. 1 whereby it is assured that impacts and jolts will tend to trigger the trap to a smaller degree. Similarly, for the same reason, the latch 7 is also preferable balanced around the axle 9 with a tendency of turning anticlockwise as seen in fig. 1.

In the embodiment shown the trap is provided with an alarm unit in the form of a electronics box 13. The electronics box 13 is provided with a sensor 20 to determine the tensioned position of the impact clamp 2. The sensor 20 is preferably designed as a wire actuating a micro switch located in the electronics box 13 in such a way that the micro switch cuts off the power supply to the electronics when the impact clamp 2 is in the tensioned position shown in fig. 1 and the wire leading to the micro switch has been lifted by the impact clamp 2. Preferably, the electronics box is designed to be fastened by a clip to the housing 1 allowing the electronic unit to be removed from the housing 1 in connection with cleaning of the trap. This detachable fixing of the electronics box 13 has the added advantage that as a modular unit the electronics box may be interchanged with various other types of alarm electronics whereby different versions of the trap may be obtained just by replacing the electronics box 13. Examples of various alarm electronic systems are: a simple acoustical and/or visual alarm, a wired external alarm of a central surveillance unit, a wireless alarm of a central surveillance unit, etc. The central surveillance unit may be designed for reforwarding of information on catches, for example via the telephone networks so that the person or firm responsible for inspection and emptying of the trap or traps only needs to attend to the traps in connection with alarms at considerably greater intervals than if no form of external alarms exits.

This system with external alarm and remote alarm is a special advantage in connection with systematic vermin control as this is carried out within the food industry where requirements as to the frequency of inspection of such traps are relatively strict with a view to preventing vermin caught from staying too long in the trap causing decomposition and obnoxious smell to develop.

In the above the invention is explained in connection with a preferred embodiment, but it may be varied in various ways within the range of the below claims.

### LIST OF REFERENCE NUMERALS

- 1: housing
- 2: impact clamp
- 3: spring
- 4: handle
- 5: retaining hook
- 6: mounting
- 7: latch
- 8: tipping device
- 9: axle
- 10: axle
- 11: recess
- 13: electronics box
- 14: opening
- 15: retaining hook
- 16: entry opening
- 17: rear wall
- 18: recess
- 19: driver end
- 20: sensor

## Claims

1. Vermin trap comprising a housing (1) with an entry opening (16) for the vermin to be caught and a trap mechanism mounted in the housing (1) which trap mechanism comprises:
a mainly U-shaped impact clamp (2) movable between a tensioned mainly vertical position and a triggered mainly horizontal position, at least one spring (3) tensioning the impact clamp (2) towards the triggered position, a latch (7) which is mounted pivotally at its top end and which can, by means of a hook-shaped part, retain the impact clamp (2) triggerable in the tensioned position, a tipping device (8), which is mounted pivotally, to interact with the lower end of the latch (7) for releasing of the retention of the impact clamp (2) by the latch (7) when the tipping device is activated by a rat or mouse, and a tensioning handle (4) connected to the impact clamp (2) to allow manual movement of the impact clamp (2) from the triggered position to the tensioned position, which handle is located outside the housing (1), and where the latch (7) is designed in such a way that the movement of the impact clamp (2) from the triggered position to the tensioned position provides the releasable meshing between the latch (7) and the impact clamp (2), **characterized** in that the impact clamp (2), the spring (3), and the handle (4) are made in one piece as an integrated component, preferably made of a spring wire, and that the handle (4) constituting part of this integrated component, projecting through an opening (14) in the housing (1) which opening (14) is designed to allow movement of the handle (4) between the two positions.

2. Vermin trap according to claim 1, **characterized** in that the retention of the of the impact clamp (2) by the latch (7) is not self-locking, but is locked by making the lower end of the latch (7) to mesh with a retention edge (18) of the tipping device (8) by tensioning of the impact clamp (2).

3. Vermin trap according to claim 2, **characterized** in that the tipping device has been designed to be largely in balance around its turning axle (10), tending to tip against the triggering direction, and is tipped into mesh with the latch (7) by means of a protrusion (11) in the tipping device (8) which during tensioning of the impact clamp (2) is actuated by the lower end of the latch (7).

4. Vermin trap according to any of the above claims, **characterized** in that the spring (3) and the handle (4) are designed at one of the legs of the impact clamp (2) while the free end of the other leg is mounted pivotally (6) in the housing (1).

5. Vermin trap according to claim 4, **characterized** in that the spring (3) is retained pivotally in the housing by suitable retaining devices (5) and that the free end of the spring (3) is prevented from turning by means of the protruding driver end (19) which is resting against the rear wall (17) of the housing (1).

6. Vermin trap according to each of the above claims, **characterized** in that the housing (1) has been designed to be provided with a detachable electronic unit to raise alarm after capture.

7. Vermin trap according to claim 6, **characterized** in that electronic unit detects capture by means of a sensor which is mounted to detect the tensioned position of the impact clamp (2).

8. Vermin trap according to the claim 6, **characterized** in that the sensor consists of a simple micro switch being actuated by the tensioned position of the impact clamp (2).

9. Vermin trap according to any of the claims 6 to 8, **characterized** in that the alarm is of a simple acoustical and/or visual alarm.

10. Vermin trap according to any of the claims 6 to 8, **characterized** in that the alarm is transmitted either wirelessly or via wires t to a central surveillance unit which can reforward information on capture for example via the telephone networks.
